Europäisches Patentamt

European Patent Office

Office européen des brevets

(19)

(11) Veröffentlichungsnummer : **0 157 107**

**B1**

(12) **EUROPÄISCHE PATENTSCHRIFT**

(45) Veröffentlichungstag der Patentschrift :
11.01.89

(21) Anmeldenummer : 85101054.6

(22) Anmeldetag : 01.02.85

(51) Int. Cl.⁴ : **C 08 F210/02** // (C08F210/02,
220:12, 220:04, 222:02)

ERRATUM

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT :
SHOULD READ :
DEVRAIT ETRE LU :

| DIE TEXTSTELLE | SEITE | ZEILE | LAUTET BERICHTIGT |
|---|---|---|---|
| der Beziehung $a = c.b^{-1,6}$ | 2 | 16 | der Beziehung $a = x.b^{-1,6}$ |
| Kaliorimeter auf 120 °C | 3 | 29 | Kalorimeter auf 120 °C |
| An dem auf diese Weise | 3 | 30 | An den auf diese Weise |
| Gassträngen wurde in allen | 4 | 4 | Gasströmen wurde in allen |

Tag der Entscheidung
über die Berichtigung  )
Date of decision on )  11.12.89
rectification: )..................

Date de décision portant )
sur modification: )

Ausgabe- und Veröffentlichungstag: )
Issue and publication )  21.03.90
date: )..................

Date d'edition et de )
publication: )

Patbl.Nr.)  90/12

EPB no:)..................

Bull. no:)

Europäisches Patentamt

European Patent Office

Office européen des brevets

(11) Veröffentlichungsnummer : **0 157 107**
**B1**

(12) **EUROPÄISCHE PATENTSCHRIFT**

(45) Veröffentlichungstag der Patentschrift :
**11.01.89**

(21) Anmeldenummer : **85101054.6**

(22) Anmeldetag : **01.02.85**

(51) Int. Cl.⁴ : **C 08 F210/02** // (C08F210/02,
220:12, 220:04, 222:02)

(54) Verfahren zur Herstellung von Copolymerisaten des Ethylens mit carboxylgruppenhaltigen Comonomeren.

(30) Priorität : **10.02.84 DE 3404743**

(43) Veröffentlichungstag der Anmeldung :
**09.10.85 Patentblatt 85/41**

(45) Bekanntmachung des Hinweises auf die Patenterteilung : **11.01.89 Patentblatt 89/02**

(84) Benannte Vertragsstaaten :
**AT BE DE FR GB NL**

(56) Entgegenhaltungen :
**EP--A-- 0 061 038**
**EP--A-- 0 106 999**
**DE--A-- 1 520 493**
**FR--A-- 2 103 098**
**GB--A-- 2 091 745**

(73) Patentinhaber : **BASF Aktiengesellschaft**
**Carl-Bosch-Strasse 38**
**D-6700 Ludwigshafen (DE)**

(72) Erfinder : **Metzger, Werner, Dr.**
**Bergstrasse 12**
**D-6717 Hessheim (DE)**
Erfinder : **Brandstetter, Franz, Dr.**
**Ritterbueschel 45**
**D-6730 Neustadt (DE)**
Erfinder : **Ziegler, Walter, Dr.**
**Starenweg 15**
**D-6803 Edingen-Neckarhausen (DE)**

EP 0 157 107 B1

**Beschreibung**

Die Erfindung betrifft ein Verfahren zur Herstellung von Terpolymerisaten des Ethylens mit Schmelzindices von 2 bis 20 g/10 min, die aus 100 Mol einpolymerisiertem Ethylen, 0,9 bis 3,2 Mol einpolymerisierten $C_1$-$C_8$-Alkylestern von $C_3$-$C_6$-Alkencarbonsäuren und 0,9 bis 2,6 Mol einpolymerisierten $C_3$-$C_6$-Alkencarbonsäuren bestehen.

Terpolymerisate des Ethylens mit $C_3$-$C_6$-Alkencarbonsäuren und mit $C_1$-$C_8$-Alkylestern von $C_3$-$C_6$-Alkencarbonsäuren sind in der Literatur beschrieben (vgl. GB-A-1 394 883, DE-A-2 341 462, US-A-3 132 120 und EP-A-161 038). All diese Produkte weisen in verschiedenen Anwendungsbereichen mehr oder weniger gute Eigenschaften auf. Unbefriedigend hingegen ist ein ausgewogenes Eigenschaftsbild hinsichtlich Kältezähigkeit und Haftung sowohl auf Eisen als auch auf Aluminium.

Der Erfindung lag daher die Aufgabe zugrunde, entsprechende Terpolymerisate des Ethylens mit einem möglichst ausgewogenen Eigenschaftsbild hinsichtlich Kältezähigkeit und Haftung auf sowohl Eisen als auch Aluminium aufzufinden.

Diese Aufgabe wurde erfindungsgemäß dadurch gelöst, daß die Terpolymerisate hergestellt werden in einem Zweizonen-Rohrreaktor bei einer Maximaltemperatur von 340 °C, wobei die Molteile an Alkylestern (a) zu Carbonsäuren (b), bezogen auf 100 Mol einpolymerisiertem Ethylen, innerhalb der eingangs definierten Bereiche der Beziehung $a = c \cdot b^{-1,6}$ gehorchen müssen, in der x eine Zahl von 2 bis 6 bedeutet, und wobei die Terpolymerisate eine Glasübergangstemperatur, bestimmt nach der DSC-Methode bei einer Abkühl- und Aufheizgeschwindigkeit von 20 °C/min, unterhalb von — 15 °C aufweisen müssen.

Die Schmelzindices der Terpolymerisate sind nach DIN 53 735 bei 190 °C und 2,16 kp bestimmt worden.

Die Herstellung der Terpolymerisate des Ethylens mit $C_1$-$C_8$-Alkylestern von $C_3$-$C_6$-Alkencarbonsäuren und $C_3$-$C_6$-Alkencarbonsäuren kann nach herkömmlichen, üblichen Hochdruckpolymerisationsverfahren im Zweizonen-Rohrreaktor erfolgen (vgl. Ullmann's Enzyklopädie der technischen Chemie, 4. Auflage, Bd. 19 (1980), Seiten 173 bis 175, Verlag Chemie GmbH, D-6940 Weinheim). Die Copolymerisation des Ethylens erfolgt bei Drücken von 350 bis 5 000 bar, vorzugsweise 1 500 bis 3 000 bar. Bei der Herstellung der Copolymerisate des Ethylens arbeitet man insbesondere bei Drücken von 1 700 bis 2 900 bar. Die Temperaturen im Polymerisationssystem liegen üblicherweise zwischen 50 und 450 °C. Unter Zweizonen-Rohrreaktoren versteht man rohrförmige Polymerisationsgefäße, die zwei Polymerisationszonen aufweisen und deren Längenausdehnung das über 2 000fache, bevorzugt 5 000- bis 50 000fache des Rohrdurchmessers beträgt. Wie üblich, wird ein Teil der Polymerisationswärme durch Kühlen des Zweizonen-Rohrreaktors mit Wasser von außen abgeführt.

Die Terpolymerisation des Ethylens erfolgt in Gegenwart radikalischer Initiatoren. Unter radikalischen Polymerisationsinitiatoren sollen diejenigen Katalysatoren verstanden werden, die auch für die Homopolymerisation des Ethylens unter Hochdruck verwendet werden. Geeignet ist beispielsweise Sauerstoff, zweckmäßigerweise in Mengen von 10 bis 100 Mol-ppm, bezogen auf das zu polymerisierende Ethylen. In Betracht kommen außerdem Peroxide und andere radikalbildende Verbindungen sowie Gemische von Peroxiden, die unterschiedliche Zerfallstemperaturen haben und Hydroperoxide, vor allem aber auch Mischungen aus Sauerstoff und Peroxiden/Hydroperoxiden. Als Beispiele für Peroxide und Hydroperoxide seien genannt : tert.-Butylperpivalat, Di-tert.-butylperoxid, tert.-Butylhydroperoxid, tert.-Butylperbenzoat, Dilauroylperoxid und tert.-Butylperisononanat.

Unter radikalischen Polymerisationsinitiatoren sollen auch Verbindungen wie beispielsweise Azoiso-buttersäuredinitril verstanden werden. Man kann auch Mischungen aus Sauerstoff und einem oder mehreren Peroxiden verwenden.

Das Molekulargewicht des anfallenden Terpolymerisats kann durch die üblichen Regler, z. B. Kohlenwasserstoffe wie Propan, Propen, Buten, etc., Ketone wie Aceton, Methylethylketon etc. oder Aldehyde wie Propionaldehyd, auf den gewünschten Wert gebracht werden. Besonders eignet sich hierbei Propionaldehyd, Propen und Buten.

Die Copolymerisation wird in Abwesenheit eines Lösungsmittels durchgeführt. Die geringen Mengen eines inerten Lösungsmittels, wie Benzol, Mineralöle oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Bei der Herstellung der speziellen Ethylenterpolymerisate ist zu beachten, daß das Comonomerverhältnis von $C_1$- bis $C_8$-Alkylestern und von $C_3$- bis $C_6$-Alkencarbonsäuren und die Reaktionsbedingungen so gewählt werden, daß im Copolymerisat die Molanteile von Alkylester (a) zu Carbonsäure (b) der Beziehung $a = x \cdot b^{-1,6}$ gehorchen, wobei x eine Zahl von 2 bis 6 bedeutet. So gelangt man zu den erfindungsgemäßen Copolymerisaten, wenn man im Zweizonen-Rohrreaktor bei einem Druck von 1 800 bis 3 000 bar und bei einer Maximaltemperatur von 340 °C arbeitet und dabei eine Mischung aus Ethylen, 1,9 Gew.% Acrylsäure-n-butylester, 0,9 Gew.% Acrylsäure am Beginn des Rohrreaktors zudosiert und nach Übersteigen der Maximaltemperatur an der Stelle, wo die Temperatur 200 °C erreicht oder unterschritten hat, noch zusätzlich die selbe Menge der Mischung, wie sie am Reaktorbeginn verwendet

2

EP 0 157 107 B1

wurde, zudosiert.

Als $C_3$- bis $C_6$-Alkencarbonsäuren (b) kommen alle derartigen Verbindungen in Frage, die unter den oben angegebenen Bedingungen mit Ethylen copolymerisieren. So sind beispielsweise verwendbar : Acrylsäure, Methacrylsäure, Itaconsäure, Aconitsäure, Maleinsäure bzw. deren Anhydrid, Citraconsäure bzw. deren Anhydrid oder Fumarsäure. Besonders geeignet sind Acrylsäure und Methacrylsäure. Es können aber auch Mischungen aus verschiedenen $C_3$- bis $C_6$-Alkencarbonsäuren verwendet werden. Die erfindungsgemäßen Copolymerisate des Ethylens enthalten 0,9 bis 2,6, vorzugsweise 1,1 bis 2,1 Mol an $C_3$- bis $C_6$-Alkencarbonsäuren auf 100 Mol Ethylen einpolymerisiert.

Als Ester der $C_3$- bis $C_6$-Alkencarbonsäuren (a) kommen Ester der oben genannten Alkencarbonsäuren von Alkoholen mit 1 bis 8 Kohlenstoffatomen in Frage. Besonders geeignet sind die Ester der Acrylsäure mit $C_1$- bis $C_8$-Alkoholen. Ganz besonders zeichnen sich die Ester der Acrylsäure mit Methanol, Ethanol oder 1-Butanol aus. Es können aber auch Mischungen aus verschiedenen $C_1$- bis $C_8$-Alkylestern von $C_3$- bis $C_6$-Alkencarbonsäuren verwendet werden. Die erfindungsgemäßen Copolymerisate des Ethylens enthalten 0,9 bis 3,2 Mol, vorzugsweise 1,4 bis 2,6 Mol der Ester auf 100 Mol Ethylen einpolymerisiert.

Wesentlich ist hierbei, daß die Molanteile an Alkylester (a) zu Carbonsäuren (b), bezogen auf 100 Mol Ethylen, der Beziehung $a = x \cdot b^{-1,6}$ gehorchen, wobei x eine Zahl von 2 bis 6, vorzugsweise von 3,2 bis 5,5 bedeutet. Des weiteren ist zu beachten, daß dies nur in den oben definierten Bereichen für die Alkylester und die Alkencarbonsäuren gilt. So wird beim Unterschreiten der Grenzen die Haftung sowohl auf Eisen als auch auf Aluminium merkbar verschlechtert ; beim Überschreiten der Grenzen wiederum wird keine Verbesserung der Haftung mehr erzielt. Die Herstellung der Produkte mit steigendem Comonomerengehalt wird aber unwirtschaftlicher.

Bei den erfindungsgemäßen Terpolymerisaten liegt Glasübergangstemperatur unter — 15 °C, bevorzugt unter — 20 °C, insbesondere zwischen — 21 und — 24 °C. Die Bestimmung der Glasübergangstemperatur wurde dabei nach der DSC-Methode vorgenommen, wobei unter DSC-Methode die Differential-Scanning-Calorimeter-Methode zu verstehen ist. Die Bestimmung der Glasübergangstemperatur ist u. a. von K. H. Illers in der Literaturstelle : « Colloid and Polymer Science, Kolloid-Zeitschrift & Zeitschrift für Polymere » 258, (1980), Nr. 2, Seiten 117 bis 124 beschrieben. Dazu wurden die Proben nach gründlicher Vakuum-Trocknung zur Befreiung von Restmonomeren im Kaliorimeter auf 120 °C erwärmt, von 120 °C mit 20 °C/min auf 20 °C abgekühlt. An dem auf diese Weise eine einheitliche thermische Vorgeschichte erteilten Proben, wurden die Wärmeflußkurven mit einer Aufheizgeschwindigkeit von 20 °C/min aufgenommen. Zur Bestimmung der Glasübergangstemperatur wurde die DSC-Kurve der Schmelze (ca. 100 °C) linear zu tieferer Temperatur extrapoliert. Es wird angenommen, daß der Schnittpunkt dieser Basislinie mit der DSC-Kurve das obere Ende des Glasübergangbereiches und das untere Ende des Schmelzbereiches (Schmelzbeginn) darstellt. Als Glasübergangstemperatur Tg wird wie üblich die Temperatur definiert, bei der die endotherme Wärmeflußstufe ihren halben Wert erreicht hat.

Die erfindungsgemäßen Terpolymerisate des Ethylens mit $C_1$- bis $C_6$-Alkylestern von $C_3$- bis $C_6$-Alkencarbonsäuren und $C_3$- bis $C_6$-Alkencarbonsäuren besitzen ein ausgewogenes Eigenschaftsbild hinsichtlich Kältezähigkeit und Haftung sowohl auf Eisen als auch auf Aluminium. Sie eignen sich vor allem als Haftvermittler.

Die Bestimmung der Haftung auf Metall wird wie im folgenden beschrieben, vorgenommen.

Ein gereinigtes und entfettetes 0,5 mm dickes Aluminiumblech der Dimension 16 × 16 cm wird an einer Seite auf einer Länge von 4 cm mit Aluminiumbronze als Trennschicht bestrichen. Auf das so präparierte Aluminiumblech wird dann die 0,3 mm dicke Folie des Klebers mit gleicher Abmessung wie das Blech gelegt, darauf eine 1 mm dicke Platte an Polyethylen. Das Plattenpaket wird in einer Presse unter einem Druck von 2 kp pro $cm^3$ innerhalb von 3 Minuten bei einer Temperatur von 180 °C miteinander verbunden.

Anschließend wird die Verbundplatte in 2,0 cm breite Steifen geschnitten. An der mit Aluminiumbronze bestrichenen Seite kann das Polyethylen (1) leicht vom Metall (2) getrennt werden, d. h. eine Haftfestigkeit ist an diesen Stellen nicht meßbar. Zur Prüfung der Haftfestigkeit des Verbundes bohrt man in 120 mm Abstand Löcher mit 5 mm Durchmesser in den Streifen.

Mit der Metallseite wird der Streifen über eine Rolle (3) mit 100 mm Durchmesser gebogen. Das Loch des mit Aluminiumbronze bestrichenen Ende des Streifens wird in einem auf der Rolle befestigten Haken (4) eingehängt ; in das andere Loch wird ein an einem Grad befestigter Haken (5) eingehängt, der über eine Spannschraube (6) über den Draht straff an die Rolle gezogen wird.

Eine Gabel (7), die die Achse (8) der Rolle führt, wird in eine Klemme (9) einer Zugmaschine eingespannt, das freie Polyethylenende des Streifens in die andere Klemme (10). Beim Auseinanderfahren der Klemmen wird der Verbund aufgeschält. Angegeben wird die Kraft in N/2 cm Streifenbreite (vgl. Figur).

Als Maß für die Kältezähigkeit dient die Schädigungsarbeit, ermittelt nach DIN 53 443, Blatt 1, an 2 mm starken Prüfkörpern.

Beispiele

Die Copolymerisation des Ethylens mit Acrylsäure-n-butylester und Acrylsäure wurde in allen Fällen

3

in einem Zweizonen-Rohrreaktor durchgeführt. Das Ethylen mit den Comonomeren wurde in zwei separaten Gasströmen mit dem Mengenverhältnis 1 : 1 mit der jeweils angegebenen Sauerstoffmenge und der notwendigen Reglermenge versetzt und bis auf Reaktionsdruck aufkomprimiert. Von den Gassträngen wurde in allen Fällen der eine der Einlaßstelle des Reaktors zugeführt und der andere an einer zweiten Gaszufuhrstelle etwa nach 1 : 3 der gesamten Reaktorlänge, nachdem sich die Reaktion in dem ersten Reaktorteil mit einem Temperaturmaximum ausgebildet hatte und die Temperatur des Gemisches schon wieder am Abklingen war, dem Reaktor zugeführt. Durch diese Maßnahme bildeten sich zwei Reaktionszonen in dem rohrförmigen Reaktor.

Der Reaktor hatte in beiden Reaktionszonen ein Längen-/Durchmesserverhältnis von etwa 10 000. Zur Abführung eines Teils der Reaktionswärme wurden die Rohrwände von außen mit Wasser gekühlt. Bei der Durchführung der in den Beispielen angeführten Versuche wurden die zur Terpolymerisation benötigen Acrylsäure- und -estermengen etwa im Verhältnis von 1 : 3 auf den Gasstrang zur ersten Reaktionszone und den Gasstrang zur zweiten Zufuhrstelle aufgeteilt. Bei der Durchführung des Vergleichsbeispiels wurde in einem 50 Liter-Autoklaven gearbeitet, wie er in der US-A-3 520 861 beschrieben ist.

Beispiele 1 bis 3

Dem oben beschriebenen Reaktor wurde ein Gemisch aus
Beispiel 1 : 972
Beispiel 2 : 972
Beispiel 3 : 968
Gewichtsteilen/Stunde Ethylen und
Beispiel 1 : 19
Beispiel 2 : 19
Beispiel 3 : 22
Gewichtsteilen/Stunde Acrylsäure-n-butylester und
Beispiel 1 : 9
Beispiel 2 : 9
Beispiel 3 : 10
Gewichtsteile Acrylsäure, welches auf einen Druck von 2 200 bar komprimiert ist, zugeführt.

Als Polymerisationsstarter wurde dem Gemisch
Beispiel 1 : 24,4
Beispiel 2 : 26,1
Beispiel 3 : 26,1
Mol-ppm Sauerstoff, bezogen auf Ethylen, zugesetzt.

Durch die freiwerdende Reaktionswärme, die nicht über die Reaktorwand an das Kühlmittel abgegeben wurde, erreichte das Reaktionsgemisch im ersten Teil des Reaktors eine maximale Temperatur von 300 °C und im zweiten Teil des Reaktors nach der zweiten Zufuhrstelle eine maximale Temperatur von 270 °C.

Als Molekulargewichtsregler wurde Propylen zugesetzt. Die Reglermenge wurde so bemessen, daß sich ein Molekulargewicht entsprechend eines Schmelzindex von
Beispiel 1 : 6,5
Beispiel 2 : 6,5
Beispiel 3 : 7,0
g/10 min, gemessen nach DIN 53 735, einstellte.

Auf diese Weise wurden
Beispiel 1 : 220
Beispiel 2 : 205
Beispiel 3 : 213
Gewichtsteile eines Ethylen-Acrylsäure-n-butylester-Acrylsäure-Terpolymerisates erhalten, dessen Comonomeranteile

|  | Acrylsäure-n-butylester (a) | Acrylsäure (b) |
|---|---|---|
| Beispiel 1 | 2,0 | 1,4 |
| Beispiel 2 | 2,0 | 1,7 |
| Beispiel 3 | 2,3 | 1,7 |

Mol/100 Mol Ethylen betragen.

4

Die gewonnenen Terpolymerisate hatten eine Glastemperatur von
Beispiel 1 : — 22 °C
Beispiel 2 : — 23 °C
Beispiel 3 : — 22 °C

Für die Schädigungsarbeitung, als Maß der Kälteschlagzähigkeit, ermittelt nach DIN 53 443, Blatt 1 an 2 mm starken Prüfkörpern wurde gefunden aus
Beispiel 1 : 12 Nm
Beispiel 2 : 10 Nm
Beispiel 3 : 12 Nm

Die gewonnenen Terpolymerisate besitzen außerdem eine Haftung auf Aluminium und Eisen, gemessen wie vorher beschrieben von 200 N/2 cm.

Vergleichsbeispiel

Es wird ein Ethylen-Acrylsäure-Copolymer hergestellt wie in US 3 520 861 in Beispiel 11 beschrieben. Der Gehalt an Acrylsäure beträgt 3,7 Mol/100 Mol Ethylen. Das Produkt zeigt eine Glastemperatur von 0 °C, die Schädigungsarbeit wurde mit 12 Nm ermittelt. Die Haftung auf Aluminiumblech betrug 150 N/2 cm und auf Eisenblech 180 N/2 cm.

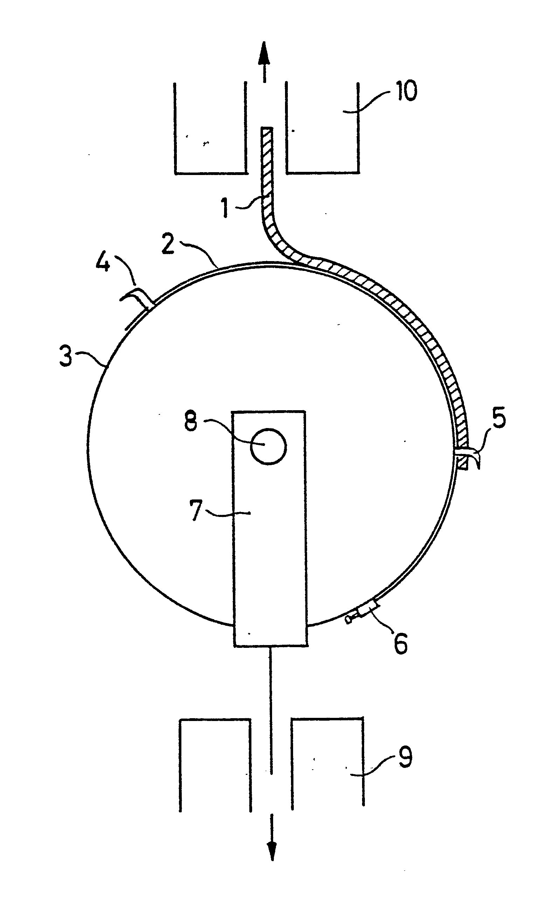

**Patentanspruch**

Verfahren zur Herstellung von Terpolymerisaten des Ethylens mit Schmelzindices von 2 bis 20 g/10 min, die aus 100 Mol einpolymerisiertem Ethylen, 0,9 bis 3,2 Mol einpolymerisierten $C_1$-$C_8$-Alkylestern von $C_3$-$C_6$-Alkencarbonsäuren und 0,9 bis 2,6 Mol einpolymerisierten $C_3$-$C_6$-Alkencarbonsäuren bestehen, dadurch gekennzeichnet, daß die Terpolymerisate bei einer Maximaltemperatur von 340 °C in einem Zweizonen-Rohrreaktor hergestellt werden, wobei die Molteile an einpolymerisiertem Alkylester (a) zu einpolymerisierten Carbonsäuren (b), bezogen auf 100 Mol einpolymerisiertem Ethylen, innerhalb der oben definierten Bereiche der Beziehung $a = x \cdot b^{-1,6}$ gehorchen müssen, in der x eine Zahl von 2 bis 6 bedeutet, und wobei die Terpolymerisate eine Glasübergangstemperatur, bestimmt nach der DSC-Methode bei einer Abkühl- und Aufheizgeschwindigkeit von 20 °C/min, unterhalb von — 15 °C aufweisen müssen.

**Claim**

A process for the preparation of a terpolymer of ethylene having a melt flow index of from 2 to 20 g/10 min and consisting of 100 moles of copolymerized ethylene, from 0.9 to 3.2 moles of copolymerized $C_1$-$C_8$-alkyl esters of $C_3$-$C_6$-alkenecarboxylic acids and from 0.9 to 2.6 moles of copolymerized $C_3$-$C_6$-alkenecarboxylic acids, wherein the terpolymer is prepared at a maximum temperature of 340 °C in a two zone pipe reactor, where the number of moles of copolymerized alkyl esters (a) and of copolymerized carboxylic acids (b), based on 100 moles of copolymerized ethylene, must fall within the ranges defined above and satisfy the relationship $a = x \cdot b^{-1,6}$, in which x is from 2 to 6, and the terpolymer must have a glass transition temperature of less than — 15 °C, determined by the DSC method at a cooling rate and a heating rate of 20 °C/min each.

**Revendication**

Procédé de préparation de terpolymères d'éthylène ayant des indices de viscosité de 2 à 20 g/10 mn, qui sont constitués de 100 moles d'éthylène polymérisé, de 0,9 à 3,2 moles d'esters alkyliques en $C_1$-$C_8$ d'acides alcènecarboxyliques en $C_3$-$C_6$ polymérisés et de 0,9 à 2,6 moles d'acides alcènecarboxyliques en $C_3$-$C_6$ polymérisés, caractérisé en ce que les terpolymères sont préparés à une température maximale de 340 °C dans un réacteur tubulaire à deux zones, de telle sorte que les proportions molaires d'ester alkylique polymérisé (a) aux acides carboxyliques polymérisés (b), par rapport à 100 moles d'éthylène polymérisé, obéissent à l'intérieur du domaine défini ci-dessus à la relation $a = x \cdot b^{-1,6}$, dans laquelle x est un nombre de 2 à 6, et que les terpolymères présentent une température de transition vitreuse, déterminée par la méthode DSC avec une vitesse de refroidissement et de chauffage de 20 °C/mn, inférieure à — 15 °C.